# EUROPÄISCHE PATENTSCHRIFT

(11) **EP 1 101 394 B1**
(45) Veröffentlichungstag und Bekanntmachung des Hinweises auf die Patenterteilung: **15.02.2006**
(21) Anmeldenummer: 00124489.6
(22) Anmeldetag: 09.11.2000
(51) Int. Cl.: A01C 15/00, B60J 7/04

(54) **Saatgutbehälter für eine Sämaschine**
Seed storage container for sowing maschine
Container de semence pour semoir

(30) Priorität: 16.11.1999 US 441247
(43) Veröffentlichungstag der Anmeldung: 23.05.2001
(73) Patentinhaber: DEERE & COMPANY, Moline, Illinois 61265-8098 (US)
(72) Erfinder: Wilson, Sylvia Ann, Moline, IL 61265 (US)
(74) Vertreter: Holst, Sönke

(56) Entgegenhaltungen:
- US-A- 3 854 771
- US-A- 5 287 984
- US-A- 5 353 947
- US-A- 5 458 256
- US-A- 5 571 272

## Beschreibung

Die Erfindung betrifft einen Saatgutbehälter für eine Sämaschine, der ein Gefäß mit vier Wänden und einer im wesentlichen horizontalen, offenen Oberseite und einen Deckel zum Abdecken der Oberseite aufweist, wobei der Deckel durch zwei Führungsbahnen verschiebbar am Gefäß gelagert ist.

Landwirtschaftliche Sämaschinen, wie beispielsweise Reihenpflanzgeräte, sind mit Behältern zur Aufnahme von Saatgut, Düngern oder Pestiziden ausgestattet. Diese Behälter umfassen in der Regel Kunststoffgefäße, die eine Vorderwand, eine Rückwand, zwei Seitenwände, eine offene Oberseite und eine Bodenwand mit einer Auslassöffnung aufweisen. Die offene Oberseite ist durch einen abnehmbaren Deckel verschlossen, der ebenfalls aus Kunststoff hergestellt sein kann. Der Deckel und das Gefäß sind mit einem Verriegelungszusammenbau ausgestattet, um den Deckel mit dem Gefäß zu verriegeln, wenn sich der Deckel in seiner vollständig geschlossenen Position befindet. Um das Gefäß zu befüllen, wird der Deckel abgenommen und Saatgut oder andere Produkte werden durch die offene Oberseite in das Gefäß eingefüllt. Der Deckel kann mit einem Haken versehen sein, so dass es an der Seite des Behälters befestigt werden kann, nachdem er abgenommen wurde. Der Haken erlaubt dem Deckel, an der Seite des Behälters vertikal nach unten zu hängen. Diese Anordnung hat sich nicht immer als befriedigend erwiesen, da die Deckel durch Windböen fortgeweht werden können, und abhängig davon, wie der Landwirt die Deckel aufhängt, können sie den Zugang zu den benachbarten Gefäßen behindern.

Bei einem gegenwärtig vertriebenen Reihenpflanzgerät gleiten die Deckel in einer im Gefäß geformten Führungsbahn nach vorn und hinten. Bei dieser Gestaltung erstrecken sich die Deckel, wenn sie sich in ihrer völlig geöffneten Position befinden, horizontal über die Gefäße hinaus nach hinten und behindern den Zugang des Landwirts zu dem jeweiligen Gefäß und den benachbarten Gefäßen. Ein derartiges Gerät ist in der US 5 458 256 A beschrieben.

Die US 5 353 947 A schlägt einen Kosmetikkoffer mit einem ausziehbaren Boden vor, der im ausgezogenen Zustand verschwenkbar ist.

Die der Erfindung zugrunde liegende Aufgabe wird darin gesehen, einen Behälter bereitzustellen, der einen Deckel aufweist, der in völlig geöffneter Stellung den Zugang zum Gefäß nicht beeinträchtigt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Saatgutbehälter einer Sämaschine weist ein Gefäß, vorzugsweise aus Kunststoff, auf, das eine im wesentlichen horizontale Oberseite hat, die durch einen Deckel verschließbar ist, der ebenfalls insbesondere aus Kunststoff ist. Das Gefäß hat eine vordere Wand, eine rückwärtige Wand und zwei seitliche Wände. Es wird vorgeschlagen, dass der Deckel durch Stifte und Führungsbahnen am Gefäß befestigt wird, so dass der Deckel von seiner geschlossenen Stellung in seine völlig geöffnete Stellung verschiebbar ist, und dort um eine horizontale Achse in seine vertikale Halteposition verschwenkbar ist. Vorzugsweise wird der Deckel von seiner geschlossenen Stellung entgegen der Vorwärtsfahrtrichtung nach hinten in die offene Stellung verschoben. Dort ist er in die vertikale Stellung verschwenkbar. Der Deckel ist mittels sich nach innen erstreckender Stifte, die in die Führungsbahn eingreifen, verschieb- und schwenkbar am Gefäß befestigt. Beim Verschieben des Deckels gleiten die Stifte in der Führungsbahn. Beim Verschwenken können sich die Stifte in der Führungsbahn drehen. Denkbar wäre aber auch, dass sie sich nicht gegenüber der Führungsbahn drehen, sondern am Deckel bzw. Gefäß. Der Bereich der Führungsbahn, in den die Stifte bei nahezu geschlossenem Deckel eingreifen, in der Regel ihr vorderer Bereich, ist nach unten abgesenkt, so dass der Deckel sich nach unten bewegt, wenn er von seiner geöffneten Stellung in seine (in der Regel vordere) völlig geschlossene Stellung geschoben wird.

Die Führungsbahnen sind vorzugsweise in zwei gegenüberliegende Wände des Gefäßes eingebracht, während die Stifte am Deckel befestigt oder mit ihm einteilig hergestellt sind. Die Führungsbahnen können in der Nähe der Oberkante des Gefäßes angeordnete Kanäle aufweisen. Denkbar wäre aber auch, die Stifte am Gefäß anzubringen und den Deckel mit den Führungsbahnen auszustatten.

Um den Deckel in seiner geschlossenen Stellung zu arretieren, können Verriegelungselemente zum Verriegeln des Deckels in seiner in der Regel vorderen, geschlossenen Stellung vorgesehen sein.

Ist der Deckel hingegen in die vertikal verschwenkte Haltestellung verbracht worden, kann er sich unterhalb der Oberkante des Gefäßes befinden.

Die Führungsbahn kann mit Öffnungen versehen sein, durch die die Stifte zur Halterung des Deckels aus der Führungsbahn entnehmbar sind, so dass der Deckel von Gefäß abgenommen werden kann.

Der Deckel kann mit einem überdeckenden Rand oder Ring versehen sein, der die Oberkante des Gefäßes überdeckt und sich von dort außerhalb des Gefäßes nach unten erstreckt.

Die zusammenwirkenden Verriegelungselemente umfassen vorzugsweise einen Haken des Deckels, der in Eingriff mit einer Nase des Gefäßes bringbar ist. Wenn der Deckel von einer geöffneten Stellung in seine geschlossene Stellung gebracht wird, gleitet der Deckel auf den in der Führungsbahn angeordneten Stiften entlang, vorzugsweise nach vorn. Wenn die Stifte sich dem vorderen Bereich der Führungsbahn nähern, bewegt sich der Deckel nach unten, da die Stifte mit dem abgesenkten Bereich der Führungsbahn zusammenwirken. Der Haken des Deckels gerät mit der Nase des Gefäßes in Eingriff und der Deckel ist am Gefäß verrastet. Die nach unten gerichtete Bewegung des Deckels ermöglicht es dem überdeckenden Rand, die Oberkante des Gefäßes besser zu bedecken und das Produkt im Gefäß besser zu schützen.

Die Stifte sind vorzugsweise im vorderen Bereich des Deckels angeordnet.

In den Zeichnungen ist ein nachfolgend näher beschriebenes Ausführungsbeispiel der Erfindung dargestellt. Es zeigt:
- Fig. 1: eine Seitenansicht einer Reiheneinheit eines Reihenpflanzgeräts, wobei sich der Deckel des erfindungsgemäßen Behälters in seiner geschlossenen Position befindet;

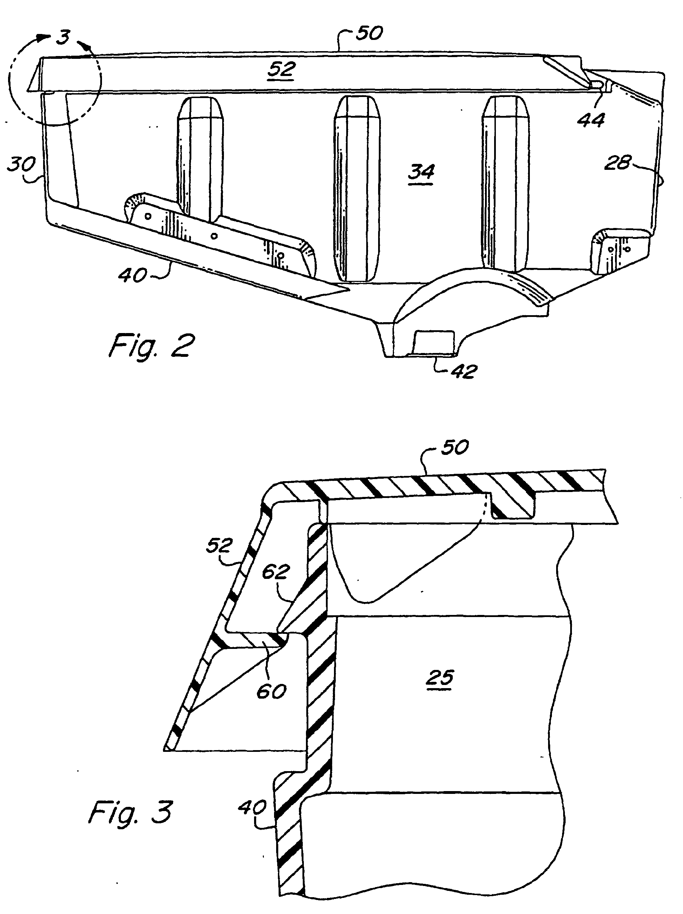

- Fig. 2: eine Seitenansicht eines erfindungsgemäßen Behälters;
- Fig. 3: eine Detailansicht des in Figur 2 gezeigten Verriegelungszusammenbaus;
- Fig. 4: eine Explosionszeichnung des Behälters, wobei der Deckel sich in seiner geöffneten, gehaltenen Position befindet;
- Fig. 5: eine perspektivische Ansicht des offenen Gefäßes des Behälters;
- Fig. 6: eine Detailansicht des vorderen Bereichs der in Figur 5 gezeigten Führungsbahn; und

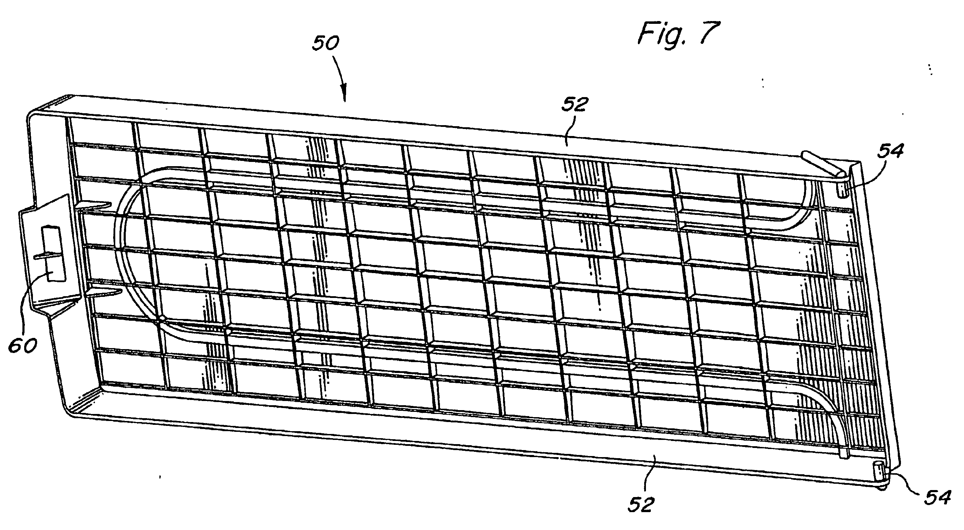

- Fig. 7: eine Ansicht des Deckels von unten.

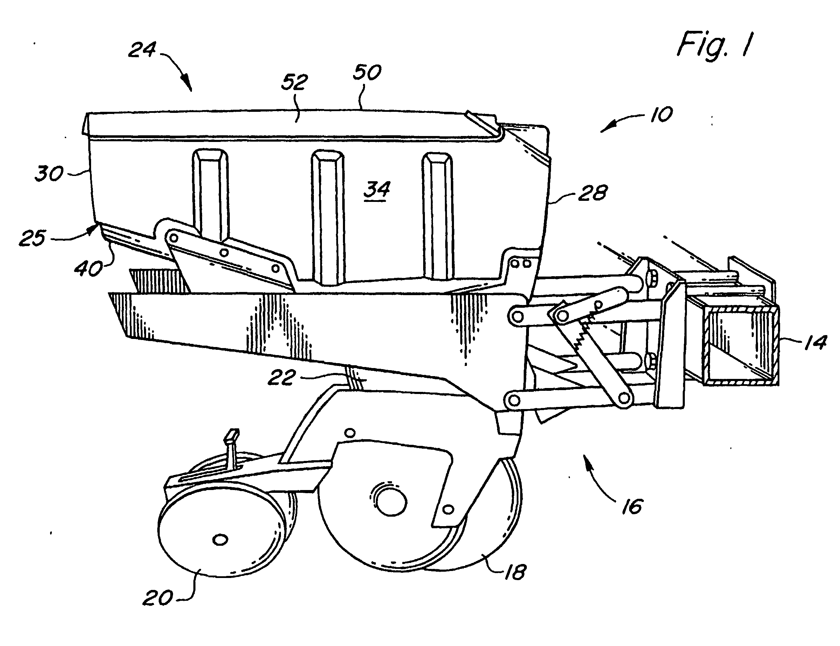

Figur 1 zeigt eine Reihenpflanzeinheit 10 mit einem Rahmen 12, der durch eine Parallelogrammverbindung 16 mit einem Werkzeugträger 14 verbunden ist. Der Rahmen 12 ist mit einem Furchenöffner 18 ausgestattet, um eine Saatfurche zu erzeugen, und mit Schließrädern 20, um die vom Furchenöffner 18 geformte Saatfurche zu schließen. Unmittelbar oberhalb des Furchenöffners 18 ist ein Messsystem 22 angeordnet, das einen abgemessenen Betrag an Saatgut in die Saatfurche abgibt. Ein Saatgutbehälter 24 ist oberhalb des Messsystems angeordnet und stellt ein Reservoir an Saatgut bereit, das dem Meßsystem zuführbar ist.

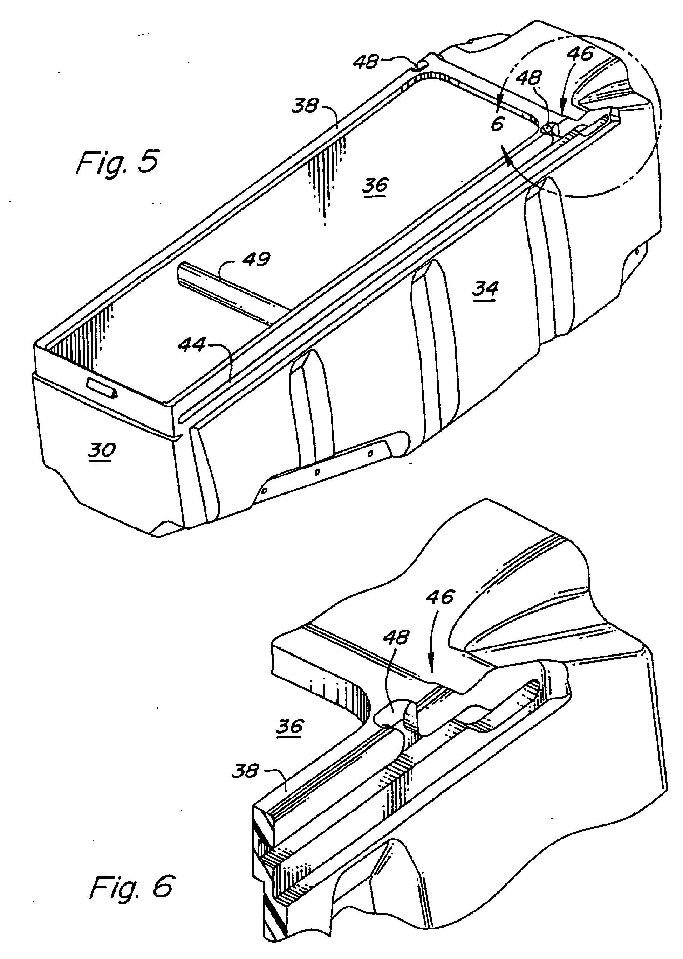

Der Saatgutbehälter 24 umfasst ein Gefäß 25 aus Kunststoff, das vordere und rückwärtige Wände 28 und 30 aufweist, die jeweils durch linke und rechte seitliche Wände 32 und 34 miteinander verbunden sind. Das Gefäß 25 ist mit einer horizontalen, offenen Oberseite 36 ausgestattet, die eine Oberkante 38 definiert. Der Boden des Gefäßes 25 wird durch eine Bodenwand 40 geschlossen, die eine Auslassöffnung 42 aufweist, die mit dem Messsystem 22 in Verbindung steht. Die Oberkante 38 ist mit Führungsbahnen 44 ausgestattet, die sich an den seitlichen Wänden 32, 34 zwischen der vorderen und der rückwärtigen Wand 28 und 30 erstrecken. Die Führungsbahnen 44 weisen je einen in den aus Kunststoff bestehenden Seitenwänden 32, 34 geformten Kanal auf. Wie in den Figuren 5 und 6 dargestellt, hat die Führungsbahn 44 einen vorderen Bereich 46 in der Nähe der vorderen Wand 28, der im Verhältnis zur übrigen Führungsbahn 44 nach unten abgesenkt ist. Zusätzlich ist die Führungsbahn 44 mit einer vertikalen Öffnung 48 versehen. Das Gefäß 25 ist im Rations-Verfahren gegossen und mit einem Versteifungselement 49 versehen, das zusätzlich als Handgriff dient, wenn das Gefäß 25 vom Rahmen 12 abgenommen wird. Beim Rotations-Verfahren wird Kunststoffmaterial in eine Form eingebracht und erhitzt. Wenn der Kunststoff schmilzt, wird die Form in Rotation versetzt. Sie wird auch dann noch gedreht, wenn der Kunststoff abkühlt. Dieses Verfahren wird verwendet, um hohle Kunststoffteile herzustellen, die eine gleichförmige Wandstärke haben.

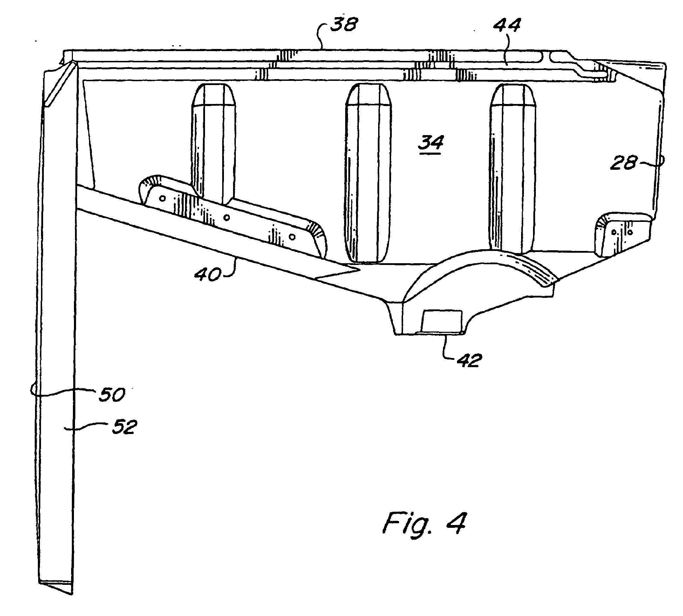

Der Saatgutbehälter 24 ist außerdem mit einem Deckel 50 ausgestattet, der einen überstehenden Rand 52 aufweist. Der vordere Abschnitt des überstehenden Randes 52 ist mit zwei nach innen überstehenden Stiften 54 versehen, die sich in der Führungsbahn 44 bewegen. Der Deckel 50 wird an dem Gefäß 25 befestigt, indem die Stifte 54 durch Öffnungen 48 hindurch abgesenkt werden, so dass die Stifte 54 frei in der Führungsbahn 44 gleiten können. Wenn der Deckel 50 auf dem Gefäß 25 nach hinten gleitet, bewegen sich die Stifte 54 in den Führungsbahnen 44. Am Ende der Führungsbahn 44 ist der Deckel 50 frei um 90 Grad in eine vertikale Haltestellung schwenkbar, wie in Figur 4 dargestellt. Der Deckel 50 ist unterhalb der Oberkante 38 des Gefäßes 25 angeordnet. Wie das Gefäß 25, kann auch der Deckel 50 aus Kunststoff hergestellt sein.

Das Gefäß 25 und der Deckel 50 sind mit zusammenwirkenden Verriegelungselementen ausgestattet, die an der Rückseite des Gefäßes 25 und des Deckels 50 angeordnet sind. Der Deckel 50 ist mit einem Haken 60 versehen, der eine am Gefäß 25 angeordnete Nase 62 untergreift. Wenn der Deckel 50 völlig geschlossen wird, indem der Deckel 50 am Gefäß 25 nach vorn verschoben wird, greift der Haken 60 unter der Nase 62 ein. Wenn er die Verriegelungselemente löst, ergreift der Landwirt den rückseitigen, sich nach außen erstreckenden Rand 52 und biegt den überstehenden Rand 52 von der Nase 62 fort. Beide Verriegelungselemente sind einteilig mit dem Gefäß 25 bzw. dem Deckel 50 gegossen.

Wenn der Saatgutbehälter 24 geschlossen wird, gleitet der Deckel 50 entlang der Führungsbahn 44 nach vorn und bewegt sich dann nach unten, wenn sich die Führungsbahn 44 absenkt, so dass der überstehende Rand 52 nach unten über die Oberkante 38 passt. Die Verriegelungselemente geraten in Eingriff, um diese untere, geschlossene Position des Deckels 50 aufrechtzuerhalten.

## Patentansprüche

1. Saatgutbehälter (24) für eine Sämaschine, der ein Gefäß (25) mit vier Wänden (28, 30, 32, 34) und einer im wesentlichen horizontalen, offenen Oberseite (36) und einen Deckel (50) zum Abdecken der Oberseite (36) aufweist, wobei der Deckel (50) durch zwei Führungsbahnen (44) verschiebbar am Gefäß (25) gelagert ist, **dadurch gekennzeichnet, dass** der Deckel (50) durch zwei in jeweils eine Führungsbahn (44) eingreifende Stifte (54) am Gefäß (25) gelagert ist, wobei der Deckel (50), die Führungsbahn (44) und die Stifte (54) derart geformt sind, dass der Deckel (50) in einer Position, in der die Oberseite (36) offen ist, in eine vertikale Stellung verschwenkbar ist, und dass die Führungsbahn (44) einen nach unten abgesenkten Bereich aufweist, in den die Stifte (54) eingreifen, wenn der Deckel (50) sich in der geschlossenen Position befindet.

2. Saatgutbehälter (24) nach Anspruch 1, **dadurch gekennzeichnet, dass** sich die Führungsbahnen (44) in zwei Wänden (32, 34) des Gefäßes (25) zwischen den anderen Wänden (28, 30) erstrecken, und dass die Stifte (54) mit dem Deckel (50) verbunden oder einteilig sind.

3. Saatgutbehälter (24) nach Anspruch 1 oder 2, **dadurch gekennzeichnet, dass** das Gefäß (25) und der Deckel (50) mit zusammenwirkenden Verriegelungselementen ausgestattet sind, um den Deckel in seiner geschlossenen Position zu verriegeln.

4. Saatgutbehälter (24) nach einem der Ansprüche 1 bis 3, **dadurch gekennzeichnet, dass** der Deckel (50) in vertikal verschwenkter Stellung unterhalb einer Oberkante (38) des Gefäßes (25) angeordnet ist.

5. Saatgutbehälter (24) nach einem der Ansprüche 1 bis 4, **dadurch gekennzeichnet, dass** die Führungsbahn (44) mit einer Öffnung (48) versehen ist, durch die die Stifte (54) aus der Führungsbahn (44) entnehmbar sind, so dass der Deckel vom Gefäß (25) abnehmbar ist.

6. Saatgutbehälter (24) nach einem der Ansprüche 1 bis 5, **dadurch gekennzeichnet, dass** der Deckel (50) mit einem überdeckenden Rand (52) versehen ist, der die Oberkante (38) des Gefäßes (25) überdeckt und sich von dort außerhalb des Gefäßes (25) nach unten erstreckt.

7. Saatgutbehälter (24) nach einem der Ansprüche 3 bis 6, **dadurch gekennzeichnet, dass** die Verriegelungselemente einen Haken (60) und eine Nase (62) umfassen.

8. Saatgutbehälter (24) nach einem der Ansprüche 1 bis 6, **dadurch gekennzeichnet, dass** die Stifte (54) in einem vorderen Bereich des Deckels (50) angeordnet sind.

9. Sämaschine mit einem Saatgutbehälter (24) nach einem der vorhergehenden Ansprüche.

## Claims

1. A seed hopper (24) for a seeding machine, comprising a bin (25) having four walls (28, 30, 32, 34) and a substantially horizontal open top (36), and a lid (50) for covering the top, whereby the lid (50) is slidably supported on the bin (25) by two guide tracks (44), **characterized in that** the lid (50) is supported on the bin by two pins (54) engaging in one of the guide tracks (44), respectively, wherein the lid (50), the guide tracks (44) and the pins (54) are shaped such that when the lid (50) is in a position in which the top (36) is open, the lid (50) can be pivoted into a vertical position, and that the guide track (44) has a depressed portion in which the pins (54) engage when the lid (50) is in its closed position.

2. A seed hopper (24) according to claim 1, **characterized in that** the guide tracks (44) extend in two walls (32, 34) of the bin (25) between the other walls (28, 30), and that the pins (54) are connected to or unitary with the lid (50).

3. A seed hopper (24) according to claim 1 or 2, **characterized in that** the bin (25) and the lid (50) are provided with cooperating latching elements for latching the lid in its closed position.

4. A seed hopper (24) according to one of claims 1 to 3, **characterized in that** when the lid (50) is pivoted vertically the lid (50) is located below a top edge (38) of the bin (25).

5. A seed hopper (24) according to one of claims 1 to 4, **characterized in that** the guide track (44) is provided with an opening (48) by which the pins (54) can be disengaged from the guide track (44) and the lid (50) removed from the bin (25).

6. A seed hopper (24) according to one of claims 1 to 5, **characterized in that** the lid (50) is provided with an overlapping edge (52) that overlies the top edge (38) of the bin (25) and extends downwardly therefrom outside the bin (25).

7. A seed hopper (24) according to one of claims 3 to 6, **characterized in that** the latching elements comprise a hook (60) and a catch (62).

8. A seed hopper (24) according to one of claims 1 to 6, **characterized in that** the pins (54) are located in a front portion of the lid (50).

9. A seeding machine with a seed hopper (24) according to one of the preceding claims.

## Revendications

1. Trémie à semences (24) pour un semoir, qui comporte un bac (25) avec quatre parois (28, 30, 32, 34) et un côté supérieur (36) ouvert, sensiblement horizontal, et un couvercle (50) destiné à couvrir le côté supérieur (36), le couvercle (50) étant monté sur le bac (25) de manière à pouvoir coulisser dans deux glissières de guidage (44), **caractérisée en ce que** le couvercle (50) est monté sur le bac (25) au moyen de deux tétons (54) s'engageant chacun dans une glissière de guidage (44), le couvercle (50), la glissière de guidage (44) et les tétons (54) étant formés de telle sorte que le couvercle (50) dans une position, dans laquelle le côté supérieur (36) est ouvert, peut pivoter dans une position verticale, et **en ce que** la glissière de guidage (44) comporte une zone affaissée vers le bas dans laquelle s'engagent les tétons (54), lorsque le couvercle (50) est dans sa position fermée.

2. Trémie à semences (24) selon la revendication 1, **caractérisée en ce que** les glissières de guidage (44) s'étendent dans deux parois (32, 34) du bac (25) entre les autres parois (28, 30), et **en ce que** les tétons (54) sont assemblés avec le couvercle (50) ou sont réalisés d'un seul tenant avec celui-ci.

3. Trémie à semences (24) selon la revendication 1 ou 2, **caractérisée en ce que** le bac (25) et le couvercle (50) sont équipés d'éléments de verrouillage coopérants, destinés à verrouiller le couvercle dans sa position fermée.

4. Trémie à semences (24) selon l'une quelconque des revendications 1 à 3, **caractérisée en ce que** le couvercle (50), dans la position verticale pivotée, est agencé en dessous d'un bord supérieur (38) du bac (25).

5. Trémie à semences (24) selon l'une quelconque des revendications 1 à 4, **caractérisée en ce que** la glissière de guidage (44) est munie d'un orifice (48), à travers lequel les tétons (54) peuvent être retirés hors de la glissière de guidage (44), de telle sorte que le couvercle (50) est démontable du bac (25).

6. Trémie à semences (24) selon l'une quelconque des revendications 1 à 5, **caractérisée en ce que** le couvercle (50) est muni d'un bord (52) couvrant, qui masque le bord supérieur (38) du bac (25) et s'étend à partir de là vers le bas à l'extérieur du bac (25).

7. Trémie à semences (24) selon l'une quelconque des revendications 3 à 6, **caractérisée en ce que** les éléments de verrouillage comportent un crochet (60) et un taquet (62).

8. Trémie à semences (24) selon l'une quelconque des revendications 1 à 6, **caractérisée en ce que** les tétons (54) sont agencés dans une zone avant du couvercle (50).

9. Semoir avec une trémie à semences (24) selon l'une quelconque des revendications précédentes.
